# DEMANDE DE BREVET EUROPEEN

(11) **EP 2 607 992 A2**
(43) Date de publication de la demande: **26.06.2013**
(21) Numéro de dépôt: 12197985.0
(22) Date de dépôt: 19.12.2012
(51) Int. Cl.: G06F 3/01, G06F 3/033, G06F 3/048, G01C 23/00, G06F 3/0354

(54) **Equipement informatique comprenant une boule de désignation et procédé de pilotage de l'équipement informatique**

(30) Priorité: 20.12.2011 FR 1103941
(71) Demandeur: Thales, 92200 Neuilly Sur Seine (FR)
(72) Inventeur: Laso Leon, Enrique Roberto, 31000 Toulouse (FR); Audouy, Amandine, 31000 Toulouse (FR); Le Merrer, Mathieu, 31000 Toulouse (FR)
(74) Mandataire: Collet, Alain

(57) **Abrégé**

L'invention se rapporte à un équipement informatique (10) comprenant une boule de désignation (11) utilisée pour pointer des objets (18) sur un écran (12) de l'équipement (10). L'invention se rapporte également à un procédé de pilotage de l'équipement informatique (10). La boule de désignation (11) comprend une partie mobile (14) et un corps (15) à l'intérieur duquel la partie mobile (14) peut se déplacer, le calculateur (13) étant configuré pour afficher au moins un objet (18) et un pointeur (19) sur l'écran (12). Selon l'invention, la boule de désignation (11) comprend des moyens permettant d'exercer un effort tangentiel sur la partie mobile (14), moyens pilotés par le calculateur (13). Le calculateur (13) est configuré pour moduler l'effort en fonction de la forme de l'objet (18) affiché et de la position du pointeur (19) par rapport à l'objet (18).

## Description

L'invention se rapporte à un équipement informatique comprenant une boule de désignation utilisée pour pointer des objets sur un écran de l'équipement. L'invention se rapporte également à un procédé de pilotage de l'équipement informatique.

On entend par boule de désignation un ensemble comportant un corps fixe et une partie mobile telle que par exemple une sphère. La partie fixe comprend des capteurs permettant de délivrer une information représentative de la position de la partie mobile par rapport à la partie fixe. L'information est associée à une position sur l'écran au moyen d'un calculateur de l'équipement. Un opérateur déplace la partie mobile avec les doigts pour atteindre une position recherchée sur l'écran et ainsi pointer un objet affiché sur l'écran.

L'invention trouve une utilité particulière pour une boule de désignation appartenant à un équipement monté à bord d'un aéronef. La boule de désignation peut alors être utilisée pour sélectionner des paramètres de vol affichés sur l'écran du système. De façon plus générale, la boule de désignation permet de pointer des objets affichés sur l'écran.

L'aéronef peut être soumis à des turbulences qui risquent de perturber le pointage des objets. Plus précisément, les turbulences génèrent des vibrations pouvant entrainer des mouvements incontrôlés de la partie mobile de la boule de désignation. Même en l'absence de turbulences avérées, de légers phénomènes d'accélération subis par l'équipement, empêchent les membres d'équipage de pointer une zone graphique au-delà d'une certaine précision.

Une solution habituelle à ce problème consiste à surdimensionner sur l'écran les objets désignables de manière à prendre en compte cette limitation. Par conséquent cela réduit le nombre d'objets affichables sur une surface d'affichage donnée.

On a également tenté de stabiliser la main de l'opérateur en créant des surfaces d'appui adaptées. Un exemple est donné dans la demande de brevet publiée sous le numéro EP 1 552 376 où la partie fixe de la boule de désignation possède une forme ergonomique destinée à recevoir la paume de l'opérateur, d'où son nom de « repose paume ». Néanmoins, un tel repose paume ne permet pas de stabiliser complètement les doigts de l'opérateur.

On a aussi tenté de générer une attraction du pointeur lors de son déplacement sur l'écran. Autrement dit, lorsque le pointeur entre dans le voisinage immédiat d'un objet à sélectionner, Cette attraction provoque un découplage entre le mouvement du pointeur et le mouvement de la main, ce qui a pour effet de rompre l'illusion de désignation directe et conduit de manière assez systématique au rejet de telles solutions de la part des utilisateurs.

L'invention vise à pallier tout ou partie des problèmes cités plus haut en proposant un équipement dans lequel un retour d'effort est généré, ce retour étant en correspondance avec la forme des objets affichés. L'opérateur ressent alors une sensation de retour d'effort semblable à celle qu'il obtient lorsqu'il presse un bouton. On peut adapter le retour d'effort pour se rapprocher d'un bouton dont la surface d'appui est concave. Le doigt de l'opérateur est alors entrainé vers le centre du bouton.

A cet effet, l'invention a pour objet un équipement informatique comprenant une boule de désignation, un écran et un calculateur, la boule de désignation comprenant une partie mobile, et un corps à l'intérieur duquel la partie mobile peut se déplacer, la boule de désignation délivrant au calculateur une information sur la position de la partie mobile par rapport au corps, le calculateur étant configuré pour afficher au moins un objet et un pointeur sur l'écran, la position du pointeur étant fonction de l'information délivrée par la boule de désignation, **caractérisé en ce que** la boule de désignation comprend des moyens permettant d'exercer un effort tangentiel sur la partie mobile, moyens pilotés par le calculateur, en ce que le calculateur est configuré pour moduler l'effort en fonction de la forme de l'objet affiché et de la position du pointeur par rapport à l'objet.

L'invention a également pour objet un procédé de pilotage d'un équipement informatique selon l'une des revendications précédentes, **caractérisé en ce qu'il** consiste à déterminer une valeur de l'effort tangentiel en fonction d'une modélisation tridimensionnelle d'une surface de l'objet, la modélisation définissant, pour différents points de la surface de l'objet, une orientation angulaire de la surface de l'objet par rapport au plan de l'écran, et en ce que l'effort tangentiel évolue en fonction du sinus de l'angle que fait la surface de l'objet avec le plan de l'écran.

L'invention sera mieux comprise et d'autres avantages apparaîtront à la lecture de la description détaillée d'un mode de réalisation donné à titre d'exemple, description illustrée par le dessin joint dans lequel :
la figure 1 représente un équipement informatique mettant en oeuvre l'invention, cet équipement comprenant une boule de désignation, un écran et un calculateur ;
les figures 2a et 2b représentent la correspondance entre mouvements d'une partie mobile de la une boule de désignation et ceux d'un pointeur affiché sur l'écran ;
les figures 3a, 3b et 4 représentent une première variante de moyens permettant d'exercer un effort tangentiel modulable sur la partie mobile ;
les figures 5a, 5b et 5c représentent une deuxième variante de moyens permettant d'exercer un effort tangentiel modulable sur la partie mobile ;
les figures 6a et 6b représentent une alternative à la deuxième variante ;
les figures 7a, 7b et 7c illustrent un exemple de correspondance entre l'effort tangentiel et la forme d'objets affichés sur l'écran ;
la figure 8 représente un exemple de formulation mathématique de l'effort tangentiel

Par souci de clarté, les mêmes éléments porteront les mêmes repères dans les différentes figures.

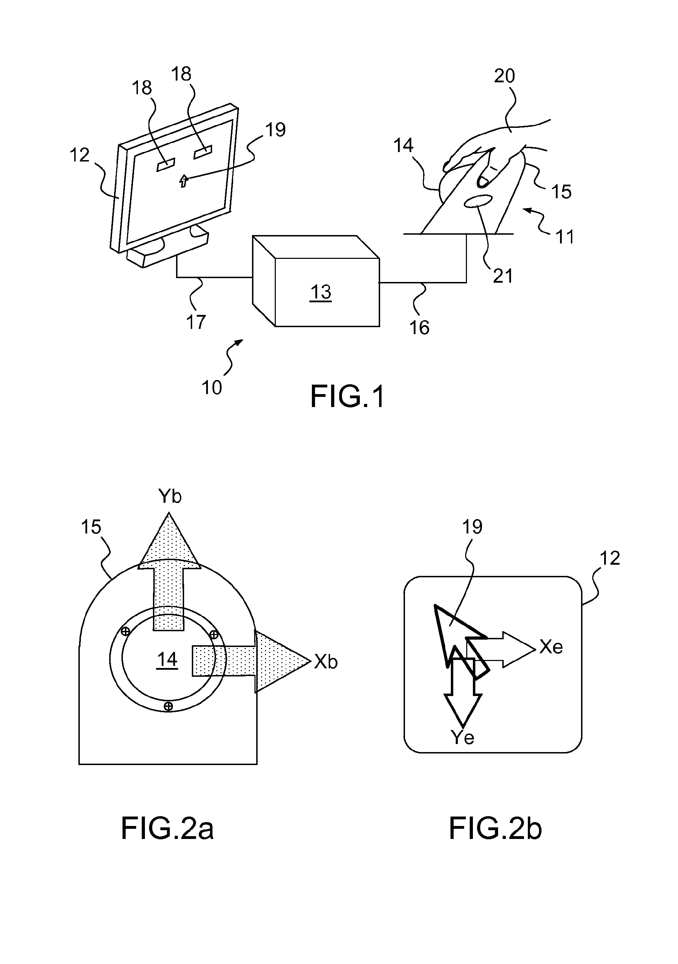

La figure 1 représente un équipement informatique 10 comprenant une boule de désignation 11, un écran 12 et un calculateur 13. La boule de désignation 11 comprend une partie mobile 14, telle que par exemple une sphère, et un corps 15 à l'intérieur duquel la sphère 14 peut se déplacer. Dans le cas d'une sphère, son déplacement possible est une rotation autour d'elle-même. Une liaison 16 relie la boule de désignation 11 au calculateur 13 et une liaison 17 relie le calculateur 13 à l'écran 12. La boule de désignation 11 délivre au calculateur 13 une information, transitant par la liaison 16, sur la position de la sphère 14 par rapport au corps 15. Le calculateur 13 est configuré pour afficher un ou plusieurs objets 18 ainsi qu'un pointeur 19 sur l'écran 12. L'affichage des objets 18 et du pointeur 19 est défini par le calculateur 13 et transite vers l'écran 12 par la liaison 17. Dans l'exemple de la figure 1, les objets 18 forment des boutons rectangulaires et le pointeur 19 est représenté par une flèche. Il est bien entendu que toutes autres formes d'objet et de pointeurs peuvent être utilisées. La position du pointeur 19 sur l'écran 12 est fonction de l'information délivrée par la boule de désignation 11. Un opérateur dont la main 20 est représentée manipule la sphère 14 pour déplacer le pointeur 19 sur l'écran 12 pour atteindre un objet 18. Le corps 15 peut avoir une forme ergonomique destinée à recevoir la paume de la main 20. L'opérateur manipule la sphère 14 du bout des doigts de sa main 20. La boule de désignation 11 peut comprendre un ou plusieurs boutons que l'opérateur peut également manipuler. Sur la figure 1, un bouton 21 est représenté. Il est accessible par le pouce de la main 20. Le bouton 21 peut être utilisé pour sélectionner un objet 18 sur lequel le pointeur 19 a été positionné par un déplacement de la sphère 14.

Les figures 2a et 2b représentent la correspondance entre mouvements de la sphère 14 et ceux du pointeur 19 affiché sur l'écran 12. Par convention on définit deux axes Xb et Yb perpendiculaires selon lesquels la sphère 14 peut se déplacer. Dans la pratique il s'agit de mouvement angulaires de la sphère 14 dans deux plans perpendiculaires contenant chacun des axes Xb et Yb. A l'axe Xb, on fait correspondre un axe Xe du plan de l'écran 12 et de même, à l'axe Yb, on fait correspondre un axe Ye du plan de l'écran 12. Les deux axes Xe et Ye forment un repère orthogonal de l'écran 12. Lorsqu'on déplace la sphère 14 selon l'axe Xb le pointeur19 se déplace selon l'axe Xe. De même un déplacement de la sphère 14 selon l'axe Yb génère un déplacement du pointeur 19 selon l'axe Ye. Dans la pratique, tout mouvement de la sphère 14 peut se définir comme une combinaison de mouvements selon les deux axes Xb et Yb qui sera traduit sur l'écran 12 par un mouvement dans le repère Xe Ye. Avantageusement, la correspondance entre les mouvements de la sphère 14 et ceux du pointeur 19 est linéaire. Plus précisément, on définit une proportionnalité entre la valeur angulaire du déplacement de la sphère 14 et la valeur linéaire du déplacement en translation du pointeur 19 à la surface de l'écran 12. Cette correspondance linéaire permet à l'opérateur de ressentir de la précision dans la manipulation du pointeur 19 sur l'écran 12.

Un but de l'invention est de faciliter le pointage d'objets 18 affichés sur l'écran 12. Pour atteindre ce but, la boule de désignation 11 comprend des moyens permettant d'exercer un effort tangentiel sur la sphère 14. Ces moyens sont pilotés par le calculateur 13 qui est configuré pour moduler l'effort tangentiel appliqué à la sphère 14 en fonction de la forme de l'objet 18 et de la position du pointeur 19 par rapport à l'objet 18.

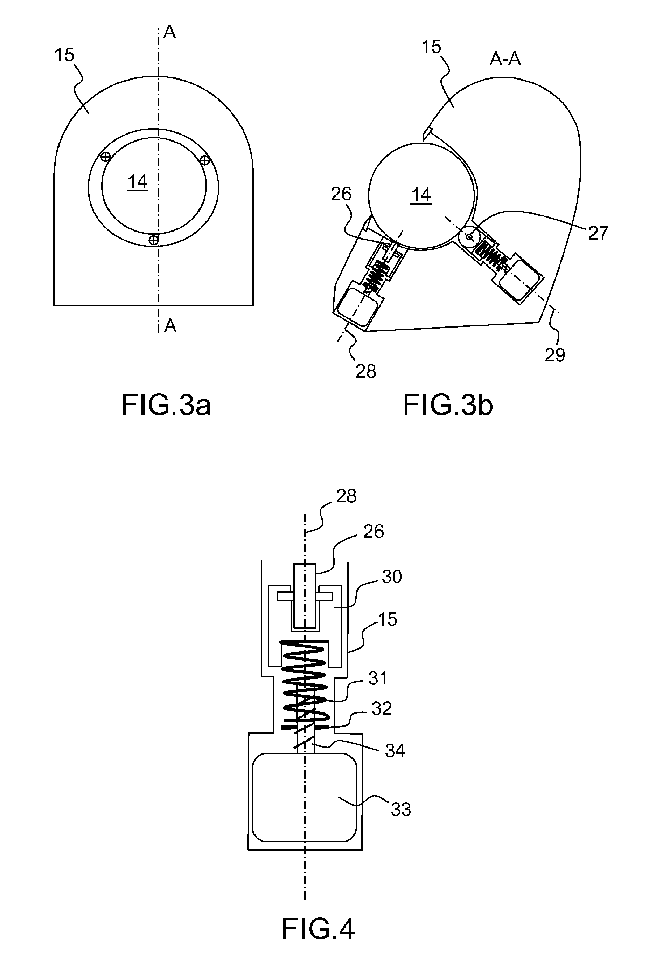

Une première variante de réalisation des moyens permettant d'exercer un effort tangentiel sur la sphère 14 est illustrée par les figures 3a, 3b et 4. Dans cette variante, l'effort tangentiel est un effort de freinage tendant à s'opposer aux déplacements de la sphère 14. Un frottement de type sec, c'est-à-dire proportionnel à l'amplitude du déplacement est mieux adapté à l'ergonomie recherchée qu'un frottement de type visqueux, c'est-à-dire proportionnel à la vitesse de déplacement.

Les moyens permettant d'exercer un effort tangentiel sur la sphère 14 comprennent deux galets 26 et 27. Le galet 26 est libre en rotation, selon l'axe Xb et frotte contre la sphère 14 selon l'axe Yb. Inversement, Le galet 27 est libre en rotation, selon l'axe Yb et frotte contre la sphère 14 selon l'axe Xb. Chacun des galets 26 et 27 est maintenu en pression contre la sphère 14 par application d'un effort exercé sur le galet correspondant perpendiculairement à la surface de la sphère 14 selon un axe 28 pour le galet 26 et un axe 29 pour le galet 27. Cet effort perpendiculaire conjugué avec le coefficient de frottement entre le galet 26 ou 27 et la sphère 14 génère l'effort tangentiel recherché dans la direction où le galet frotte contre la sphère 14.

Un exemple de moyens permettant d'obtenir l'effort de pression du galet 26 contre la sphère 14 est illustré figure 4 où le galet 26 est monté dans une chape 30. Plus précisément, le galet 26 conserve un degré de liberté en rotation par rapport à la chape 30. La chape 30 ne possède qu'un degré de liberté en translation par rapport au corps 15 selon l'axe 28. La chape 30 est poussée vers la sphère 14 par un ressort 31 maintenu en compression par une butée 32. La compression du ressort 31 est modulée par en déplaçant la butée 32 en translation selon l'axe 28. Le déplacement de la butée 32 peut être obtenu au moyen d'un moteur rotatif 33 actionnant une vis 34 coopérant avec un taraudage réalisé dans la butée 32. La butée 32 ne possède qu'un degré de liberté en translation par rapport au corps 15 selon l'axe 30. Pour assurer un réglage fin du déplacement de la butée 32, le moteur rotatif 33 peut être du type pas à pas.

Un tel dispositif permet, par le biais d'un contrôle de position du moteur pas à pas 33, de moduler la force normale sur le galet 26 et par conséquent l'effort tangentiel sur la sphère 14. Néanmoins, cette variante présente l'inconvénient de ne pas simuler d'effet de rappel. De plus, pour cette variante, il est nécessaire de recalibrer la loi de position des moteurs pour prendre en compte l'usure des galets ou la contamination des surfaces en contact entre les galets et la sphère 14 par exemple par un corps gras. Ces contaminations font évoluer le coefficient de frottement entre les galets et la sphère 14 et par conséquent influent sur l'effort tangentiel que les galets appliquent à la sphère 14 lors de ses déplacements.

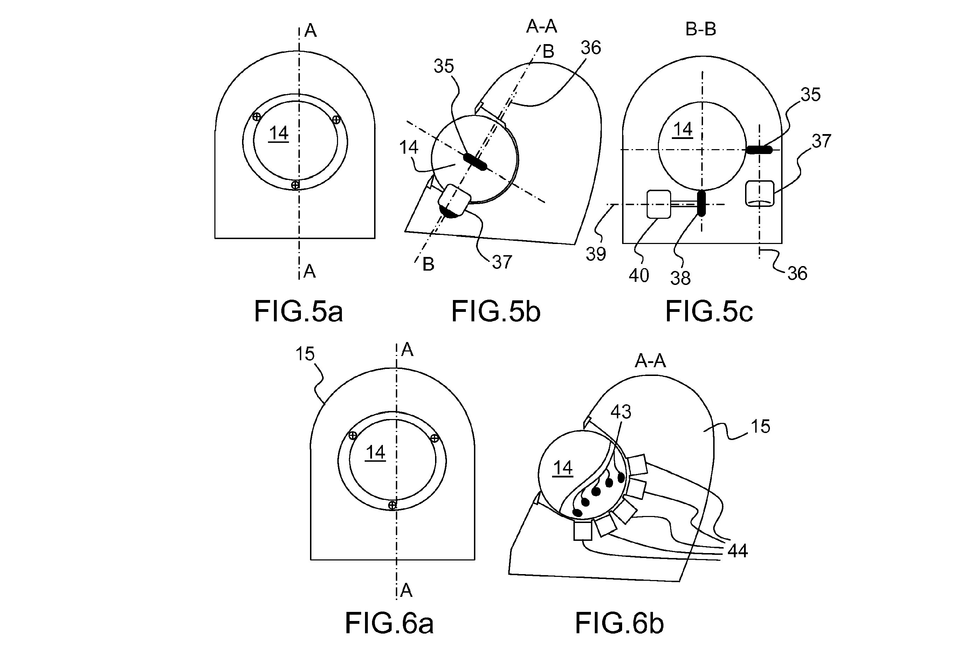

Les figures 5a, 5b et 5c représentent une deuxième variante de moyens permettant d'exercer un effort tangentiel modulable sur la sphère 14 et permettant de simuler un effet de rappel. Dans cette variante, l'effort tangentiel est appliqué au moyens de moteurs appartenant à la boule de désignation et pilotés par le calculateur 13. Autrement dit, la boule de désignation 11 comprend des moyens de motorisation du déplacement de la sphère 14. Les moyens de motorisation génèrent un effort tangentiel sur la sphère 14 se combinant avec l'effort exercé par la main 20 de l'opérateur. C'est cet effort combiné qui permet le déplacement de la sphère 14 par rapport au corps 15.

La boule de désignation 11 comprend un premier galet 35 pouvant être entrainé en rotation autour d'un axe 36 par un moteur 37 ainsi qu'un second galet 38 pouvant être entrainé en rotation autour d'un axe 39 par un moteur 40. Les axes 36 et 39 sont perpendiculaires. Les galets 35 et 38 ont une forme de roue autour de leur axe respectif 36 et 39 tout en assurant un contact sensiblement ponctuel avec la sphère 14. Ainsi lorsque la sphère 14, est entrainée en rotation autour d'un premier axe par un des galets, ce dernier n'entrave pas, ou très peu, la rotation de la sphère autour d'un second axe perpendiculaire au premier axe. Les moteurs 37 et 40 sont pilotés en couple afin de générer une sensation de retour d'effort. L'opérateur peut exercer un couple inverse supérieur au couple exercé par un des moteurs et déplacer la sphère 14 en opposition au couple exercé par le moteur.

Pour cette deuxième variante, il est également nécessaire de recalibrer la loi de position des moteurs pour prendre en compte l'usure des galets ou la contamination des surfaces en contact entre les galets et la sphère 14 par exemple par un corps gras.

Avantageusement pour les deux variantes, la boule de désignation 11 comprend des moyens de débrayage des moyens permettant d'exercer un effort tangentiel sur la sphère 14. Les moyens de débrayage permettent l'utilisation de boule de désignation 11 même si un blocage intervient. En outre dans la deuxième variante où les moyens permettant d'exercer un effort tangentiel sur la sphère 14 sont motorisés, les moyens de débrayage sont utilisés en cas de pertes d'alimentation électrique des moteurs 37 et 40.

Les moyens de débrayage peuvent par exemple être formés d'une carcasse dans laquelle sont montés les moyens permettant d'exercer un effort tangentiel sur la sphère 14. Cette carcasse peut être écartée de la sphère 14 au moyen d'une came elle-même commandée par un levier situé à côté du corps 15.

Les figures 6a et 6b représentent une alternative de la deuxième variante dans laquelle un rotor des moyens de motorisation est directement formé par la sphère 14. Plusieurs aimants permanents 43 sont disposés dans la sphère et des électro-aimants 44 sont disposés dans le corps 15. Le pilotage des électro-aimants 44 permet d'appliquer un couple à la sphère 14.

Le débrayage du dispositif se fait simplement par une coupure de l'alimentation électrique des électro-aimants 44. Une commande manuelle pour ce débrayage est placée à proximité du corps 15.

On va maintenant décrire un exemple de correspondance entre le retour d'effort ressenti par l'opérateur lorsqu'il manipule la boule de désignation 10 et la forme des objets affichés sur l'écran 12.

On cherche à reproduire dans les doigts de l'opérateur un effort semblable à celui qu'il aurait en traînant son doigt au-dessus des objets en relief dessinés sur l'écran en position horizontale en laissant sa main peser avec un poids constant.

Une interface graphique est souvent constituée de boutons et autres objets représentant des métaphores d'objets physiques destinés à indiquer à l'utilisateur qu'il s'agit la d'une zone de l'écran sur laquelle une action de sélection aura un effet.

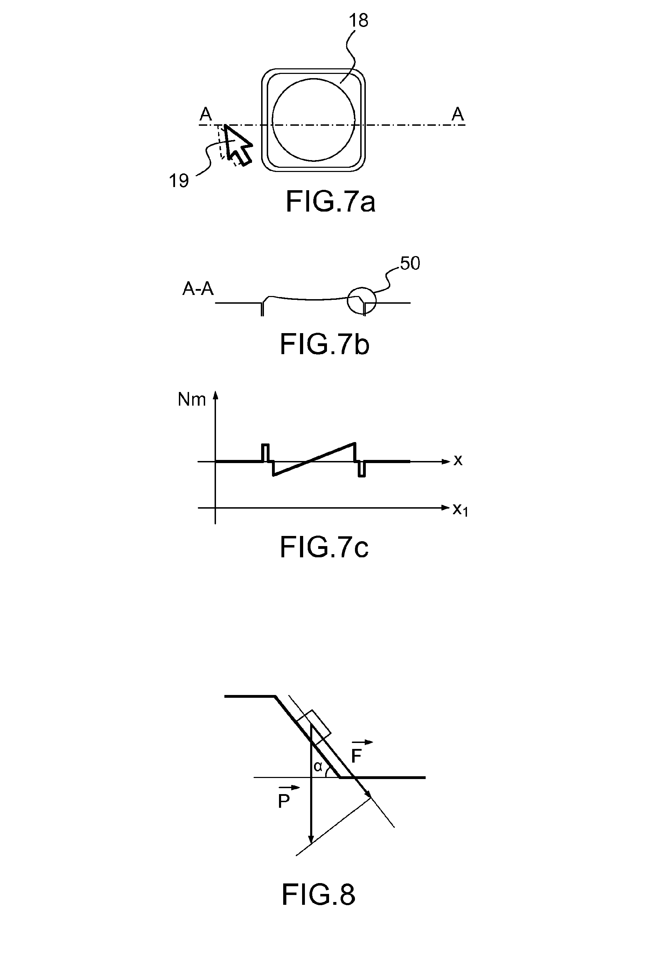

On peut par exemple définir une charte graphique dans laquelle des objets affichés sur l'écran 12 sont éclairés par une source de lumière placée en haut à gauche. Un bouton 18 représenté en coupe sur la figure 7b peut être représenté sur l'écran 12 comme sur la figure 7a.

Un tel bouton s'il est parcouru du bout du doigt avec un poids constant, le long d'une ligne allant de droite à gauche, notée AA sur la figure 7a, à une vitesse constante produirait un effort latéral comme représenté sur la figure 7c. La valeur de l'effort est donnée en ordonnée et l'abscisse de la figure 7c est en concordance avec la figure 7b. La courbe d'effort représentée sur la figure 7c est directement liée à une modélisation tridimensionnelle de l'objet 18 survolé par le pointeur 19. L'effort latéral est indiqué en unité de couple (N.m) représentant un couple appliqué à la sphère 14 se traduisant par une force tangentielle au niveau des doigts de l'opérateur au regard du diamètre important de la sphère 14 par rapport à la taille des doigts de l'opérateur.

On détermine une valeur de l'effort tangentiel en fonction d'une modélisation tridimensionnelle d'une surface de l'objet 18, La modélisation définit par exemple, pour différents points de la surface de l'objet 18, une orientation angulaire de la surface de l'objet 18 par rapport au plan de l'écran 12. Les points peuvent être définis de façon discrète par exemple à l'intersection de lignes et de colonnes d'une matrice du plan de l'écran 12. Chaque point forme par exemple un pixel de l'écran 12.

On peut définir une formulation mathématique du retour d'effort donnant des sensations ergonomiques satisfaisantes pour l'opérateur. Un exemple de formulation mathématique est représenté sur la figure 8 montrant une zone 50 agrandie de la figure 7b. On considère que le doigt est en glissement sans frottement avec la surface imaginaire de l'écran 12. On affecte au doigt un poids P̅ hypothétique constant. L'effort tangentiel F est directement lié au poids P̅ par le sinus d'un angle α que fait localement, au point ou le pointeur 19 est situé, la surface de l'objet 18 dans sa modélisation tridimensionnelle avec la surface de l'écran 12 supposée horizontale. Autrement dit, l'effort tangentiel F évolue en fonction du sinus de l'angle α que fait la surface de l'objet 18 avec le plan de l'écran 12.

La représentation faite à l'aide des figures 7c et 8 montre l'évolution de l'effort tangentiel lors d'un déplacement du pointeur 19 selon une direction rectiligne. Dans l'exemple représenté, la direction est celle de l'axe AA sur la figure 7a. Il est bien entendu que la modélisation tient compte de tout déplacement possible du pointeur 19 dans le plan de l'écran 12. Dans l'exemple de modélisation présenté, on peut définir à cet effet, pour chaque point de l'objet 18 une orientation au moyen d'un vecteur défini par des composantes x et y dans le plan de l'écran 12 et une composante z perpendiculaire au plan de l'écran 12. Pour faciliter les calculs de l'effort tangentiel, ce vecteur d'orientation est avantageusement normé. Autrement dit x² + y² + z² = 1. On peut ainsi ne stocker que deux des coordonnées, par exemple x et y.

On a vu précédemment que la définition du vecteur d'orientation peut se faire de façon discrète sur le plan de l'écran 12. Des essais ont montré que pour chacun des vecteurs une précision de huit bits sur chacune des coordonnées x et y est suffisante, soit deux octets par vecteur. Par exemple pour un écran de 1024 x 768 pixels, la définition des différents vecteurs d'orientation utilise environ 1,5 Méga octets (1024x768x2).

Cette occupation de la mémoire est donnée pour la mémoire graphique de l'écran 12, mémoire qui est habituellement située dans le calculateur 13. En amont de cette mémoire graphique, il est possible de définir des objets 18 pouvant se déplacer sur la surface de l'écran 12. On peut par exemple définir un bouton tel que représenté sur la figure 7a sur une zone de 64 x 64 pixels. La surface de l'écran 12 sans objets comprend, pour chaque pixel, des composantes x et y nulles. Lorsqu'on souhaite placer un bouton à une position particulière de l'écran 12, on vient remplacer localement les coordonnées x et y nulles par les coordonnées des 64 x 64 pixels formant la zone représentant le bouton. Il est ainsi possible de créer des images dynamiques dans lesquelles des objets 18 se déplacent avec l'image. Une utilisation de ce type d'image dynamique est utile en navigation aérienne. Un fond de carte peut défiler sur l'écran 12 en fonction des déplacements de l'aéronef et des points de passage représentés par des objets 18 en relief se déplacent sur l'écran avec le déplacement de la carte. Les objets 18 semblent fixes par rapport à la carte.

L'effort tangentiel F est appliqué à la sphère 14 au moyen d'un couple généré par les moteurs décrits plus haut. Le couple est orienté selon un vecteur perpendiculairement au vecteur représentant l'effort tangentiel. Une convention de signe est appliquée pour obtenir un retour d'effort cohérent. Par exemple pour un bouton creux en forme de cuvette tel que représenté sur les figures 7a et 7b, un déplacement du bord du bouton vers son centre génère un couple négatif décroissant atteignant une valeur nulle au centre de la cuvette. Le couple négatif tend à entrainer la sphère 14 vers le fond de la cuvette.

Il est possible de laisser la sphère 14 libre de ses mouvements en l'absence d'objet 18 survolé par le pointeur 19. Un exemple de courbe d'effort tangentiel est donné sur la figure 7c où l'axe horizontal est l'axe X. L'effort tangentiel est réparti de part et d'autre de l'axe X. Cela présente néanmoins des difficultés en cas de vibrations subies par l'équipement 10. En l'absence d'objet 18 où lorsqu'un objet 18 comprend une surface plane horizontale, aucun effort tangentiel n'est exercé sur la sphère 14 et celle-ci peut se déplacer légèrement au gré de vibrations sans action de l'opérateur. Ces vibrations peuvent être dues à des turbulences subies par l'équipement 10. Dans une mise en oeuvre de l'équipement 10 à bord d'un aéronef, des turbulences sont inévitables et pour limiter leurs effets, on additionne avantageusement à l'effort tangentiel modulé un effort constant. Cet effort représente un frottement sec appliqué à la sphère 14 lors de ses déplacements. Cet effort peut être obtenu mécaniquement par exemple au moyen de balais frottant contre la sphère 13 ou encore au travers des moteurs de la boule de désignation 11. Un exemple de courbe d'effort tangentiel est donné sur la figure 7c où l'axe horizontal est l'axe X1. L'effort tangentiel est décalé d'une valeur séparant les axes X et X1. L'effort tangentiel est en permanence positif. La modulation de l'effort tangentiel fonction de la forme de l'objet reste bien entendue présente.

En complément de l'effort constant ajouté, on peut augmenter les effets d'attraction en fonction du niveau de vibration. Plus précisément on peut augmenter l'amplitude des variations de l'effort tangentiel lorsque des turbulences apparaissent. Les variations de l'effort tangentiel sont définit lors d'essais. Ces variations permettent d'avoir un mouvement plus fluide en conditions stables et plus précis en conditions vibratoires ou turbulentes.

Avantageusement, l'équipement 10 est destiné à être embarqué sur un porteur, comme par exemple un aéronef. L'équipement 10 comprend des moyens pour mesurer un niveau de turbulence du porteur. Le calculateur 13 est configuré pour régler l'amplitude de l'effort tangentiel en fonction du niveau de turbulence mesuré. Autrement dit sur la figure 7c, il est possible de régler l'écart entre les axes X et X1 et plus généralement de moduler l'effort constant ajouté à l'effort tangentiel. Cette modulation est fonction du temps. A un instant donné, l'effort ajouté est constant sur toute la surface de l'écran 12. Plus précisément, on augmente cet écart lorsque le niveau de perturbation mesuré augmente.

Les moyens pour mesurer un niveau de turbulence peuvent comprendre un accéléromètre mesurant l'accélération du porteur. A bord d'un aéronef, on choisira par exemple de mesurer une accélération verticale bien représentative de turbulences habituelles. On peut aussi mesurer les turbulences suivant trois axes d'un repère orthogonal afin d'améliorer la précision de la mesure.

L'estimation du niveau de turbulence peut se faire en mesurant la densité spectrale de puissance du signal à la sortie d'un accéléromètre, ou celle de la somme des signaux de sortie quand on dispose de plusieurs accéléromètres. Cette densité spectrale est ensuite filtrée par un filtre passe-haut. Cette mesure d'accélération peut être obtenue à partir de centrales inertielles généralement installées à bord de l'aéronef ou à partir d'accéléromètres formés à partir de composants micro usinés placés dans l'équipement 10.

Les mouvements de la sphère 14 est donc généré par plusieurs causes : l'action de l'opérateur, l'effort tangentiel, les frottements résiduels dus au déplacement mécanique de la sphère 14 par rapport au corps 15 ainsi que l'inertie de la sphère 14.

L'inertie est un paramètre à prendre en compte si on souhaite permettre à l'utilisateur de déplacer rapidement la sphère 14 sans être confronté à une succession de « creux » et de « bosses » contre lesquels il peut buter. On entend par creux et bosses les variations d'effort tangentiel lorsque le pointeur 19 survole un objet 18. Ces variations donnent des sensations de creux et de bosses et plus généralement d'obstacles à franchir pour l'opérateur lorsqu'il déplace la sphère 14. Avantageusement, on génère un moment cinétique de la sphère 14 fonction de la vitesse de rotation de la sphère 14. Ce moment cinétique est calibré pour que la sphère 14 franchisse les obstacles dus aux variations d'effort tangentiel lorsque la vitesse de rotation de la sphère 14 atteint une valeur donnée. Autrement dit, le moment cinétique peut faciliter la rotation de la sphère 14 en opposition à l'action de la modulation de l'effort tangentiel.

Ce moment cinétique peut être obtenu en adaptant la masse ou la répartition de masse de la sphère 14 elle-même ou en introduisant dans le calcul de l'effort tangentiel un terme de pseudo inertie tendant à réduire les frottements et /ou l'amplitude des variations d'effort tangentiel.

## Revendications

1. Equipement informatique comprenant une boule de désignation (11), un écran (12) et un calculateur (13), la boule de désignation (11) comprenant une partie mobile (14) et un corps (15) à l'intérieur duquel la partie mobile (14) peut se déplacer, la boule de désignation (11) délivrant au calculateur (13) une information sur la position de la partie mobile (14) par rapport au corps (15), le calculateur (13) étant configuré pour afficher au moins un objet (18) et un pointeur (19) sur l'écran (12), la position du pointeur (19) étant fonction de l'information délivrée par la boule de désignation (11), **caractérisé en ce que** la boule de désignation (11) comprend des moyens (26, 27, 28, 29 ; 35, 37, 38, 40 ; 43, 44) permettant d'exercer un effort tangentiel sur la partie mobile (14), moyens pilotés par le calculateur (13), **en ce que** le calculateur (13) est configuré pour moduler l'effort en fonction de la forme de l'objet (18) affiché et de la position du pointeur (19) par rapport à l'objet (18), **en ce que** l'équipement est destiné à être embarqué sur un porteur, **en ce que** l'équipement comprend des moyens pour mesurer un niveau de turbulence du porteur et **en ce que** le calculateur (13) est configuré pour régler l'amplitude de l'effort en fonction du niveau de turbulence mesuré..

2. Equipement informatique selon la revendication 1, **caractérisé en ce que** la boule de désignation (11) comprend des moyens pour débrayer les moyens permettant d'exercer un effort tangentiel sur la partie mobile.

3. Equipement informatique selon l'une des revendications précédentes, **caractérisé en ce que** l'effort tangentiel est un effort de freinage tendant à s'opposer aux déplacements de la partie mobile.

4. Equipement informatique selon l'une des revendications 1 ou 2, **caractérisé en ce que** l'effort tangentiel est appliqué au moyens de moteurs (37, 40 ; 43, 44) appartenant à la boule de désignation (11) et pilotés par le calculateur (13).

5. Procédé de pilotage d'un équipement informatique selon l'une des revendications précédentes, **caractérisé en ce qu'il** consiste à déterminer une valeur de l'effort tangentiel en fonction d'une modélisation tridimensionnelle d'une surface de l'objet (18), la modélisation définissant, pour différents points de la surface de l'objet (18), une orientation angulaire (α) de la surface de l'objet (18) par rapport au plan de l'écran (12), et **en ce que** l'effort tangentiel évolue en fonction du sinus de l'angle (α) que fait la surface de l'objet (18) avec le plan de l'écran (12).

6. Procédé selon la revendication 5, **caractérisé en ce que** l'effort tangentiel évolue proportionnellement à un poids fictif constant appliqué à l'objet (18) perpendiculairement au plan de l'écran (12) et au sinus de l'angle (α) que fait la surface de l'objet (18) avec le plan de l'écran (12).

7. Procédé selon la revendication 6, **caractérisé en ce qu'**on additionne à l'effort tangentiel modulé un effort constant représentant un frottement sec constant appliqué à la sphère (14) lors de ses déplacements.

8. Procédé selon l'une quelconque des revendications 6 ou 7, **caractérisé en ce que** l'effort constant sur la surface de l'écran est modulé en fonction de mesures de turbulences.

9. Procédé selon l'une quelconque des revendications 5 à 8, **caractérisé en ce qu'**on génère un moment cinétique de la sphère (14) fonction de la vitesse de rotation de la sphère (14), le moment cinétique pouvant faciliter la rotation de la sphère (14) en opposition à l'action de la modulation de l'effort tangentiel.
